# EUROPÄISCHE PATENTSCHRIFT

(11) **EP 1 362 013 B1**
(45) Veröffentlichungstag und Bekanntmachung des Hinweises auf die Patenterteilung: **02.02.2011**
(21) Anmeldenummer: 02732444.1
(22) Anmeldetag: 20.02.2002
(51) Int. Cl.: C03C 3/091

(54) **SOLARISATIONSSTABILES BOROSILICATGLAS UND SEINE VERWENDUNGEN**
SOLARIZATION STABLE BOROSILICATE GLASS AND USES THEREOF
VERRE BOROSILICATE STABLE A LA SOLARISATION ET SES UTILISATIONS

(30) Priorität: 23.02.2001 DE 10108992
(43) Veröffentlichungstag der Anmeldung: 19.11.2003
(73) Patentinhaber: Schott AG, 55122 Mainz (DE)
(72) Erfinder: NAUMANN, Karin, 55270 Ober-Olm (DE); RITTER, Simone, 55116 Mainz (DE); OTT, Franz, 95666 Mitterteich (DE); STAPPEN, Herbert, 55296 Harxheim (DE)
(86) Internationale Anmeldenummer: PCT/EP2002/001748
(87) Internationale Veröffentlichungsnummer: WO 2002/081394

(56) Entgegenhaltungen:
- EP-A- 1 178 020
- DE-A- 4 306 004
- JP-A- 6 056 467
- PATENT ABSTRACTS OF JAPAN vol. 1996, no. 05, 31. Mai 1996 (1996-05-31) & JP 08 012369 A (TOSHIBA GLASS CO LTD), 16. Januar 1996 (1996-01-16) in der Anmeldung erwähnt
- PATENT ABSTRACTS OF JAPAN vol. 1998, no. 06, 30. April 1998 (1998-04-30) & JP 10 036135 A (TOSHIBA GLASS CO LTD), 10. Februar 1998 (1998-02-10) in der Anmeldung erwähnt

## Beschreibung

Die Erfindung betrifft ein solarisationsstabiles Borosilicatglas und seine Verwendungen.

Als Hintergrundbeleuchtung von beispielsweise Displays z. B. von Personalcomputern, Laptops, Taschenrechnern, Fahrzeugnavigationssystemen, werden spezielle Leuchtstoffröhren, sogenannte "Backlights" verwendet.

Während übliche Leuchtstoffröhren aus einem Weichglas bestehen, das eine sehr geringe Solarisationsstabilität aufweist, werden für Backlights, deren Aufbau prinzipiell dem von Leuchtstoffröhren entspricht, um eine Langzeitfunktionalität zu gewährleisten, solarisationsstabilere Gläser gebraucht.

Aufgrund des Aufbaus der Backlights müssen die verwendeten Gläser mit Wolfram vakuumdicht verschmelzbar sein. Dafür müssen sie eine an das thermische Ausdehnungsverhalten von W angepasste thermische Dehnung aufweisen. Beim thermischen Ausdehnungskoeffizienten α_{20/300} von W von 4,4 x 10⁻⁶/K sind Gläser mit α_{20/300} zwischen 3,7 x 10⁻⁶/K und 4,2 x 10⁻⁶/K geeignet. Auch dies ein Unterschied gegenüber den genannten Weichgläsern, die mit Fe-Ni-Legierungen verschmolzen werden.

Die Gläser sollen eher niedrige Transformationstemperaturen Tg, das heißt Tg < 520 °C, besitzen, damit sie bei eher niedrigen Temperaturen verarbeitet werden können.

Wesentlich für die Gläser ist ihr Transmissionsverlauf. Im Sichtbaren ist eine möglichst hohe Lichtdurchlässigkeit gefordert, um eine hohe Lichtausbeute der Lampe zu erhalten, im UV-Bereich ist eine definierte Transmission entsprechend dem Anwendungszweck gefordert. Beispielsweise ist der Einfluß schädlicher UV-Strahlung ≤ 260 nm zu verhindern durch entsprechendes Herabsetzen der UV-Transmission, um Kunststoffe, z. B. in Laptops, nicht vergilben und verspröden zu lassen. Dafür sind Gläser mit einer UV-Transmission bei λ ≤ 260 nm τ von < 0,7 %, gemessen an 0,2 mm dicken Proben, geeignet. Für z. B. Blitzlampen oder Entladungslampen reichen Transmissionen τ bei λ ≤ 260 nm von ≤ 30 % (bei 0,2 mm dicken Proben) aus. Der Übergang vom undurchlässigen zum durchlässigen Wellenlängenbereich soll möglichst kurz sein, das heißt die Transmissionskurve soll in diesem Bereich möglichst steil verlaufen.

Die Mindestanforderung an die Transmission im sichtbaren Wellenlängenbereich ist bei λ > 400 nm und einer Probendicke von 0,2 mm eine Transmission von 92 %. Gefordert ist also τ (> 400 nm; 0,2 mm) ≥ 92 %.

Eine weitere wesentliche Eigenschaft von Gläsern für "Backlights" ist die Solarisationsbeständigkeit, die nötig ist, um eine lange Lebensdauer der Lampen, daß heißt eine möglichst konstantbleibende Lichtausbeute zu ermöglichen. Unter "solarisationsstabil" sollen hier Gläser verstanden werden, die nach einer 15-stündigen HOK-4-Bestrahlung, also einer Bestrahlung mit einer Hg-Hochdrucklampe mit einer Hauptemission bei 365 nm und einer Bestrahlungsstärke von 850 µW/cm² bei 200 bis 280 nm in 1 m Abstand, an einer 0,2 mm dicken Glasprobe einem Transmissionsabfall von weniger als 5 % bei 300 nm zeigen. Die Anforderungen an Gläser für Blitzlampen, für Gasentladungslampen und für Backlights sind sehr ähnlich. Alle sollen eine möglichst hohe Solarisationsstabilität besitzen und im sichtbaren Bereich eine hohe Transmission aufweisen.

In der Patentliteratur sind bereits verschiedene Schriften bekannt, die mehr oder weniger solarisationsstabile Gläser, insbesondere Lampengläser, beschreiben. Diese Gläser zeigen aber die verschiedensten Nachteile, insbesondere eine den heutigen hohen Anforderungen nicht genügende Solarisationsbeständigkeit.

US 5,994,248 beschreibt eine Scheinwerferlinse, aus einem Glas eines sehr breiten Zusammensetzungsbereichs, in dem SiO₂ Bestandteil ist und Al₂O₃, B₂O₃, Erdalkalioxide und Alkalioxide und geringe Mengen an Eisenoxiden Bestandteile sein können. Der K₂O-Anteil darf dabei lediglich zwischen 0 und 1 Gew.-% betragen.

Die für Backlights, Blitzlampen und Gasentladungslampen wesentlichen Eigenschaften wie Solarisationsstabilität und eine an Wolfram angepaßte thermische Dehnung spielen hier keine Rolle.

De 195 45 422 A1 betrifft ein Bondglas zum anodischen Bonden von Siliciumkomponenten mit Glaskomponenten, das hoch Li₂O-haltig ist und hohe Fe₂O₃/FeO-Dotierungen enthält.

JP 10-36135 A beschreibt Glas für elektronische Bilderfassung. Wesentlich ist hier die möglichst geringe α-Strahlung des Glases. Dazu betragen in einer weiten Grundglaszusammensetzung die Gehalte an U, Th, Ra < 100 ppb, und die Gehalte an Fe₂O₃, TiO₂, PbO, ZrO₂ betragen < 100 ppm.

EP 0 735 007 B1 beschreibt ein konkretes blei- und arsenfreies Glas mit Widerstand gegen. Solarisation, das spezielle Gehalte an SnO₂ und CeO₂ enthält, wodurch die Solarisationsstabilität zwar erhöht wird, dies jedoch nicht in zufriedenstellendem Maße.

Gleiches gilt für das CeO₂ und Fe₂O₃ enthaltende Glas der WO 98/55413.

JP6056467 A beschreibt ein UV-Strahlung absorbierendes Borosilikatglas, das nicht zu vernachlässigende Mengen des stark färbenden V₂O₅ und nur relativ geringe Mengen an K₂O aufweist.

Das in JP 8-12369 A beschriebene Borosilicatglas für Entladungslampen enthält zur UV-Blockung insgesamt 0,03 bis 3 Gew.-% von wenigstens zwei der vier Komponenten V₂O₅, Fe₂O₃, TiO₂ und CeO₂. Mit diesen Komponenten mit teilweisen hohen Einzelanteilen und ihrer Kombinationen ist eine hohe Transmission und eine hohe Solarisationsbeständigkeit nicht einstellbar.

Es ist daher Aufgabe der vorliegenden Erfindung, ein solarisationsstabiles, UV (< 260 nm) -undurchlässiges Glas mit hoher Transmission im Sichtbaren sowie mit einer an das Ausdehnungsverhalten von Wolfram angepaßten thermischen Dehnung bereitzustellen.

Die Aufgabe wird durch ein Borosilicatglas gemäß dem Hauptanspruch gelöst.

Ein Glas mit den gewünschten Transmissionseigenschaften besteht vorzugsweise aus einem Grundglassystem von 70 bis 80 Gew.-% SiO₂, 13 bis 18 Gew.-% B₂O₃, 0,5 bis 4 Gew.-%, bevorzugt 0,5 bis < 2 Gew.-% AL₂O₃, Alkalioxiden, und zwar vorzugsweise 2 bis 5 Gew.-% Na₂O und 1 bis 3 Gew.-%, bevorzugt > 1 bis 3 Gew.-%, K₂O und 0 bis 1 Gew.-% Li₂O, bevorzugt Li₂O-frei, und fakultativ Erdalkalioxiden, und zwar vorzugsweise 0-1 Gew.-% MgO, 0 - 1 Gew.-% CaO und 0 -1 Gew.-% BaO, bevorzugt BaO-frei.

Erfindungswesentlich ist das gleichzeitige Vorhandensein von TiO₂ und Fe₂O₃ in speziellen Anteilen, und zwar 0,01 bis 0,05 Gew.-% Fe₂O₃ und 0,05 bis 0,8 Gew.-% TiO₂.

Die jeweiligen Mindestgehalte sowohl von Fe₂O₃ als auch von TiO₂ sind nötig, um die hohe Solarisationsbeständigkeit zu erzielen. Bevorzugt ist ein TiO₂-Gehalt von wenigstens 0,1 Gew.-%, besonders bevorzugt ist ein Gehalt von wenigstens 0,2 Gew.-% TiO₂, ganz besonders bevorzugt sind wenigstens 0,4 Gew.-% TiO₂. Durch das gleichzeitige Vorhandensein dieser beiden Komponenten in den genannten Mengen wird die UV-Kante, das heißt der Übergang zwischen Absorption und Transmission, bei der gewünschten Wellenlänge erhalten.

Höhere Gehalte an Fe₂O₃ als 0,05 Gew.-% würden ein Absenken der Transmission im Bereich von 350 bis ca. 600 nm bedeuten, was auf den Einfluss des Fe³⁺ zurückzuführen ist. Höhere Gehalte an TiO₂ als 0,8 Gew.-% würden hingegen zur Verschiebung der UV-Kante in den längerwelligen sichtbaren Bereich und somit zur Gelbfärbung der Gläser führen. Außerdem bildet sich mit der Erhöhung beider Komponenten über die angegebenen Höchstgehalte Ilmenit, das zur Braunfärbung des Glases und somit zum Absenken der Transmission führt.

Das Glas kann übliche Läutermittel in üblichen Mengen enthalten, so z. B. Verdampfungsläutermittel wie CI⁻ und F⁻, aber auch Redoxläutermittel, die aufgrund ihrer polyvalenten Kationen wirksam sind, z. B. SnO₂ und Sb₂O₃, die vorzugsweise im Glas mit jeweils 0 bis 0,5 Gew.-% vorhanden sind. Besonders bevorzugt ist ein SnO₂-Gehalt zwischen 0 und 0,2 Gew.-%.

As₂O₃ enthält das Glas bis auf unvermeidliche Verunreinigungen nicht, da sich As₂O₃ nachteilig auf die Solarisationsbeständigkeit auswirken würde.

Gleiches gilt für PbO. Daher ist das Glas auch bis auf unvermeidliche Verunreinigungen PbO-frei.

Das Glas kann bis zu 0,5 Gew.-%, bevorzugt bis zu 0,1 Gew.-% MnO₂ enthalten. In dieser Größenordnung dient es als Läutermittel und verschiebt die UV-Kante in den langwelligen Bereich.

Das Glas kann 0 bis 1 Gew.-% ZrO₂ enthalten. ZrO₂ ist vor allem für die chemische Resistenz des Glases von Vorteil. Höhere Gehalte an ZrO₂ würden sich negativ auf das Einschmelzen auswirken, und die Verarbeitungstemperatur der Gläser würde zu hoch. Außerdem bestünde die Gefahr, daß unaufgelöste Gemengepartikel zurückblieben. Es ist bevorzugt, auf den Zusatz von ZrO₂ zu verzichten, so daß das Glas bis auf unvermeidliche Verunreinigungen durch Rohstoffe oder Wannenkorrosion ZrO₂-frei ist.

Das Glas ist außerdem bis auf unvermeidliche Verunreinigungen frei von CeO₂. Dies ist von großem Vorteil für die Transmissionseigenschaften, denn CeO₂ wirkt sich sehr negativ auf die Solarisationsbeständigkeit aus.

### Ausführungsbeispiele:

Zur Herstellung der Beispielgläser und der Vergleichsgläser wurden übliche Rohstoffe eingesetzt, d. h. es ist insbesondere nicht erforderlich, teure Fe-arme Rohstoffe zu verwenden.

Das gut homogenisierte Gemenge wurde im Labor in einem Pt-Tiegel bei 1600 °C geschmolzen, geläutert und homogenisiert. Anschließend wurde das Glas gegossen und mit 20 K/h gekühlt.

Die Tabelle 1 zeigt ein Schmelzbeispiel für eine 0,5-I-Schmelze.

| **Oxid** | **Gew.-%** | **Rohstoff** | **Einwaage [g]** |
|---|---|---|---|
| SiO₂ | 74,90 | SiO₂ | 670,51 |
| B₂O₃ | 16,90 | H₃BO₃ | 145,08 |
| Al₂O₃ | 1,14 | Al₂O₃ | 7,94 |
| Na₂O | 3,73 | Na₂B₄O₇ | 101,04 |
| K₂O | 1,44 | K₂CO₃ | 18,65 |
| CaO | 0,60 | CaCO₃ | 0,1727 |
| MgO | 0,42 | Dolomit | 16,38 |
| NaCl | 0,45 | NaCl | 4,01 |
| TiO₂ | 0,40 | TiO₂ | 3,36 |
| Fe₂O₃ | 0,025 | Fe₂O₃ | 0,0913 |

Die Eigenschaften des so erhaltenen Glases sind in Tabelle 2, Beispiel A4, angegeben.

Die Tabelle 2 zeigt sechs Beispiele erfindungsgemäßer Gläser (A1 bis A6) mit ihren Zusammensetzungen (in Gew.-% auf Oxidbasis) und ihren wesentlichen Eigenschaften.

Die Tabelle 3 zeigt die Zusammensetzungen und Eigenschaften von fünf Vergleichsgläsern (V1 bis V5).

Den Glasgemengen wurde jeweils 0,45 Gew.-% NaCl zugesetzt. In den fertigen Gläsern finden sich lediglich ca. 0,29 Gew.-% NaCl wieder.

Folgende Eigenschaften sind in den Tabellen 2 und 3 angegeben:
- der thermische Ausdehnungskoeffizient a_{20/300} [10⁻⁶/K]
- die Transformationstemperatur T_{g} [°C]
- die Solarisationsbeständigkeit, angegeben als die Differenz der Transmission bei λ = 300 nm zwischen einer 0,2 mm dicken unbestrahlten Probe und einer solchen nach 15-stündiger Bestrahlung mit einer HOK-4-Lampe, angegeben als Δ₁₅τ(300 nm, 0,2 mm) [%]
- die Transmission bei λ > 400 nm und einer Probendicke von 0,2 mm τ (> 400 nm; 0,2 mm) zur Dokumentation der hohen Transmission im Sichtbaren
- die Transmission bei λ = 260 nm und einer Probendicke von 0,2 mm τ (260 nm; 0,2 mm) zur Dokumentation der Transmission im UV-Bereich (UV-Blockung).

Tabelle 1

| Zusammensetzungen (in Gew.-% auf Oxidbasis) und wesentliche Eigenschaften erfindungsgemäßer Gläser (A) | | | | | | |
|---|---|---|---|---|---|---|
| | A1 | A2 | A3 | A4 | A5 | A6 |
| SiO₂ | 75,17 | 74,57 | 74,92 | 74,90 | 75,13 | 75,00 |
| B₂O₃ | 16,96 | 16,94 | 16,90 | 16,90 | 16,95 | 16,92 |
| Al₂O₃ | 1,15 | 1,65 | 1,14 | 1,14 | 1,15 | 1,15 |
| Na₂O | 3,74 | 3,73 | 3,73 | 3,73 | 3,74 | 3,73 |
| K₂O | 1,45 | 1,45 | 1,44 | 1,44 | 1,45 | 1,44 |
| CaO | 0,60 | 0,60 | 0,60 | 0,60 | 0,60 | 0,60 |
| MgO | 0,42 | 0,42 | 0,42 | 0,42 | 0,42 | 0,42 |
| TiO₂ | 0,075 | 0,200 | 0,400 | 0,400 | 0,100 | 0,100 |
| SnO₂ | - | - | - | - | - | 0,200 |
| MnO₂ | - | - | - | - | 0,025 | - |
| Fe₂O₃ | 0,013 | 0,01 | 0,013 | 0,025 | 0,013 | 0,013 |
| α_{20/300} [10⁻⁶/K] | 3,84 | 3,84 | 3,88 | 3,80 | 3,82 | 3,88 |
| T_{g} [°C] | 503 | 495 | 511 | 496 | 496 | 504 |
| Δ₁₅τ (300nm; 0,2mm) [%] | 4,4 | 2,2 | 2,1 | 2,4 | 3,8 | 4,3 |
| τ (260 nm; 0,2 mm) [%] | 21 | 8,7 | 0,6 | 0,3 | 15,7 | 18,7 |
| τ (> 400 nm; 0,2 mm) [%] | > 92 | > 92 | > 92 | > 92 | > 92 | > 92 |

**Tabelle 2**

| Zusammensetzungen (in Gew.-% auf Oxidbasis) und wesentliche Eigenschaften Vergleichsgläsern (V) | | | | | |
|---|---|---|---|---|---|
| | V1 | V2 | V3 | V4 | V5 |
| SiO₂ | 75,17 | 75,22 | 74,57 | 75,11 | 75,22 |
| B₂O₃ | 16,96 | 16,97 | 16,94 | 16,95 | 16,97 |
| Al₂O₃ | 1,15 | 1,15 | 1,65 | 1,15 | 1,15 |
| Na₂O | 3,74 | 3,74 | 3,73 | 3,74 | 3,74 |
| K₂O | 1,45 | 1,45 | 1,45 | 1,45 | 1,45 |
| CaO | 0,60 | 0,60 | 0,60 | 0,60 | 0,60 |
| MgO | 0,42 | 0,42 | 0,42 | 0,42 | 0,42 |
| NaCl | 0,45 | 0,45 | 0,45 | 0,45 | 0,45 |
| TiO₂ | 0,075 | 0,034 | 0,200 | 0,100 | 0,0033 |
| CeO₂ | - | - | - | 0,05 | - |
| Fe₂O₃ | 0,0084 | 0,013 | 0,0084 | 0,013 | 0,0084 |
| α_{20/300} [10⁻⁶/K] | n.b. | 3,55 | n.b. | n.b. | n.b. |
| T_{g} [°C] | n.b. | 497 | n.b. | n.b. | n.b. |
| Δ₁₅τ (300 nm; 0,2 mm) [%] | 5,8 | 5,5 | 6,7 | 5,8 | 7,8 |
| τ (260 nm; 0,2 mm) | 41,3 | 39,8 | 9,6 | 11 | 65,8 |
| τ (> 400 nm; 0,2 mm) | > 92 | > 92 | > 92 | > 92 | > 92 |

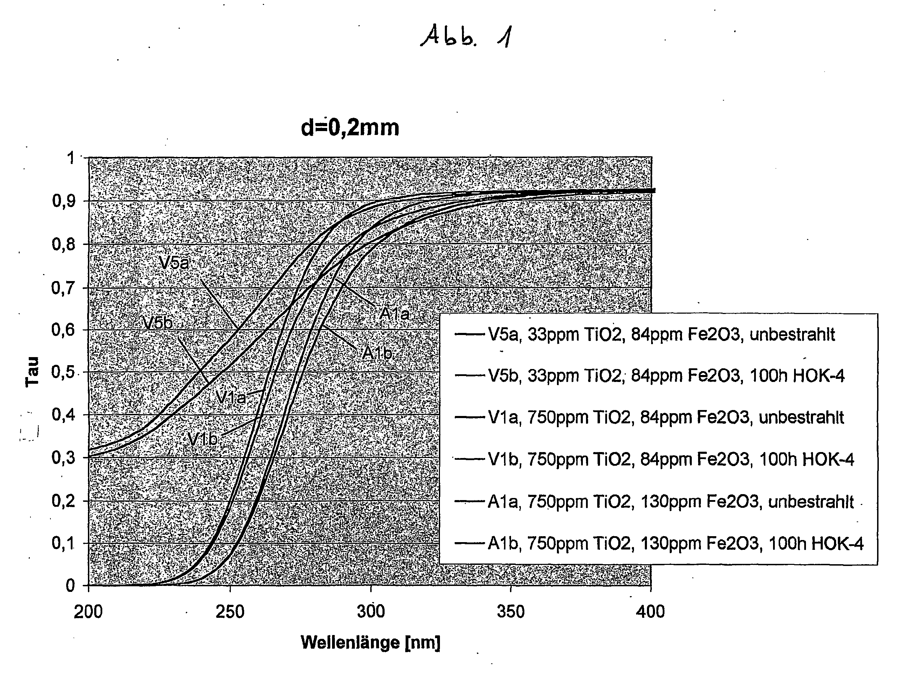

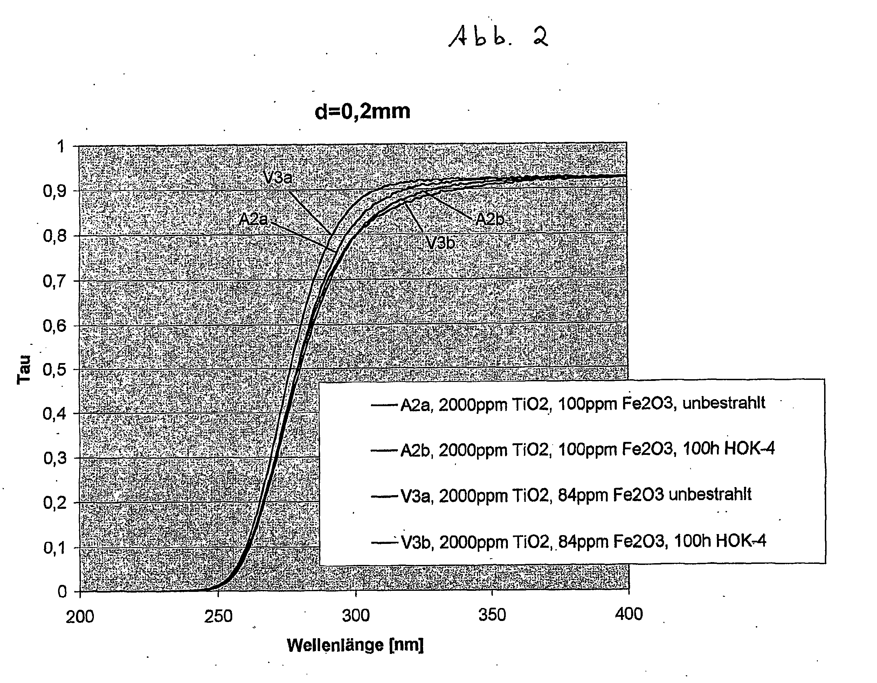

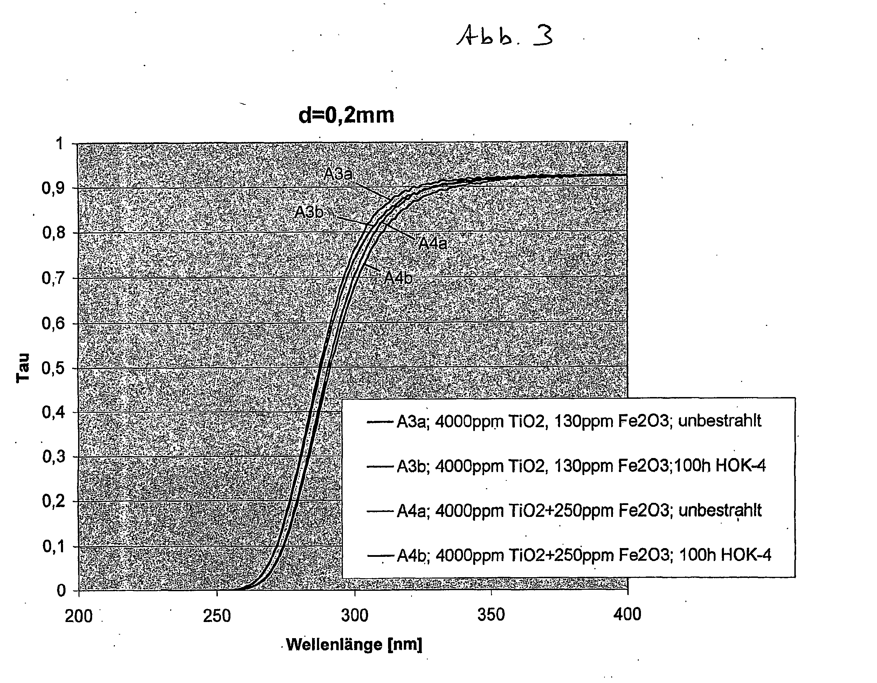

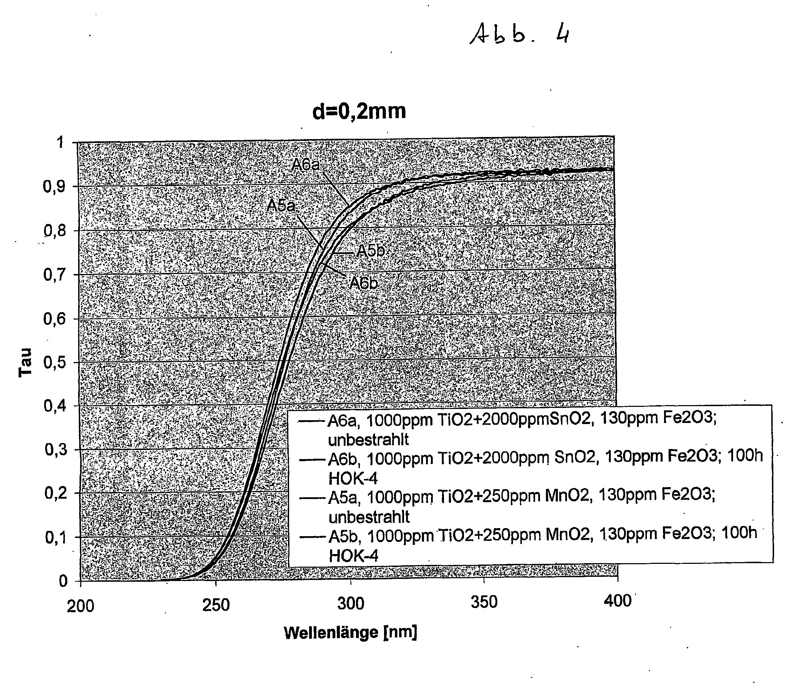

In den Abbildungen 1 bis 5 sind die Transmissionskurven τ gegen λ (200 - 400 nm) für einige Ausführungs- und Vergleichsbeispiele vor (a) und nach (b) Bestrahlung angegeben.

Im einzelnen:
- Abb. 1:: A1 und V1, V5, jeweils unbestrahlt und nach 100 stündiger Bestrah- lung mit einer HOK-4-Lampe (Probendicke: 0,2mm)
- Abb. 2:: A2 und V3, jeweils unbestrahlt und nach 100 stündiger HOK-4- Bestrahlung (Probendicke: 0,2mm)
- Abb. 3:: A3, A4, jeweils unbestrahlt und nach 100 stündiger HOK-4- Bestrahlung (0,21 mm Probendicke)
- Abb. 4:: A5, A6, jeweils unbestrahlt und nach 100 stündiger HOK-4- Bestrahlung (Probendicke ca. 0,21 mm)
- Abb. 5:: A4 und V4, jeweils unbestrahlt und nach 100 stündiger HOK-4- Bestrahlung (Probendicke 2mm)

Die Abbildungen dokumentieren, daß der gewünschte Transmissionsverlauf durch die speziellen Gehalte an TiO₂ und Fe₂O₃ erzielt wird, wie insbesondere der Vergleich mit den Fe₂O₃-armen Beispielen V1, V5, V3 bzw. den TiO₂-armen Beispielen V2, V5 zeigt. Auch die Bedeutung der CeO₂-Freiheit für die Transmission wird verdeutlicht.

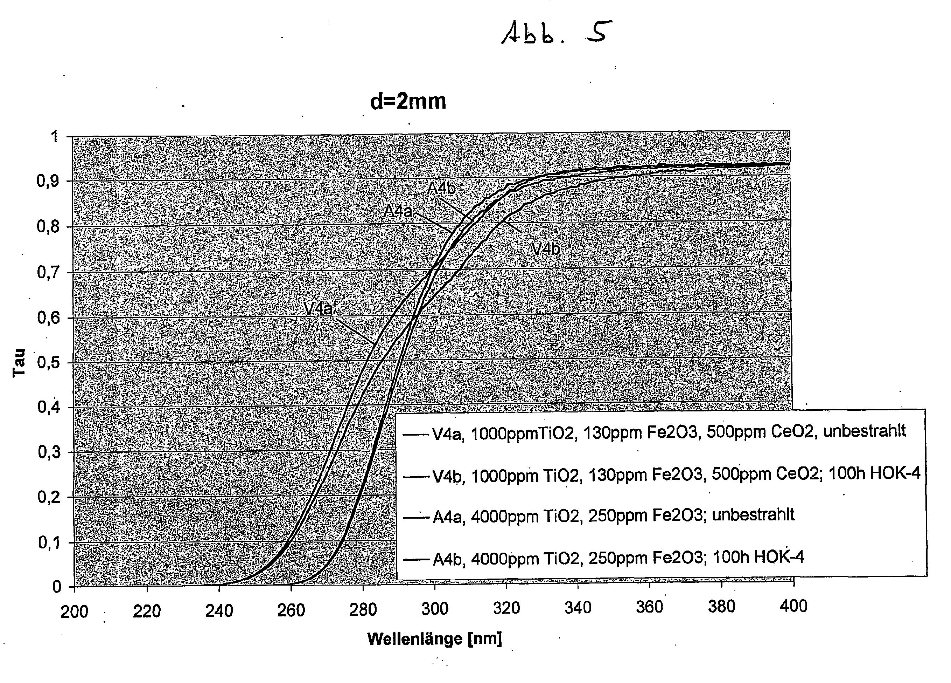

Die Abbildungen sowie die Angabe Δ₁₅τ (300nm; 0,2mm) in den Tabellen verdeutlichen die Unterschiede in der Solarisationsbeständigkeit zwischen erfindungsgemäßen Gläsern und Vergleichsgläsern. Auch der negative Einfluß des CeO₂ wird bei Vergleich von V4 beispielsweise mit A5 oder A6, insbesondere aber mit A1 (s. Tabelle) oder A4 (siehe Abb. 5), deutlich.

Die erfindungsgemäßen Gläser besitzen eine hohe Solarisationsbeständigkeit, ausgedrückt durch Δ₁₅τ (300nm; 0,2mm) von < 5 %, eine hohe Transmission im Sichtbaren (s. Transmissionsverlauf), insbesondere ausgedrückt durch τ (> 400 nm; 0,2mm) ≥ 92 %, und eine gute UV-Blockung (s. Transmissionsverlauf), insbesondere ausgedrückt durch τ (≤ 260 nm; 0,2 mm) ≤ 30 % .

Weiter besitzen die Gläser eine Transformationstemperatur Tg < 520 °C, wodurch sie gut verarbeitbar sind.

Weiter besitzen die Gläser einen thermischen Ausdehnungskoeffizienten α_{20/300} zwischen 3,7 x 10⁻⁶/K und 4,2 x 10⁻⁶/K. Sie sind damit ausreichend gut an das thermische Ausdehnungsverhalten von Wolfram angepaßt, sind also mit W vakuumdicht verschmelzbar.

Mit diesen Eigenschaften sind Gläser gut geeignet für die Herstellung von Lampenkolben für Blitzlampen und für Gasentladungslampen.

In bevorzugten Ausführungsformen mit vergleichsweise hohen TiO₂-Gehalten weisen die Gläser eine besonders gute UV-Blockung auf, insbesondere ausgedrückt durch τ (≤ 260 nm; 0,2mm) ≤ 0,7 %

Damit sind diese Gläser hervorragend geeignet für die Herstellung von "Backlights", beispielsweise für die Hintergrundbeleuchtung von Displays, z. B. von Personalcomputern, Laptops, Notebooks, Taschenrechnern, Fahrzeugnavigationssystemen, Scannern, aber auch von Spiegeln und Bildern.

Sie sind ebenso geeignet für die Herstellung von Bremslichtern von Fahrzeugen. Insbesondere das dritte zusätzliche Bremslicht kann vorzugsweise durch eine solche spezielle Leuchtstoffröhre realisiert werden.

## Patentansprüche

1. Borosilicatglas mit einer Zusammensetzung (in Gew.-% auf Oxidbasis) von
| | |
|---|---|
| SiO₂ | 70 - 80 |
| B₂O₃ | 13 - 18 |
| Al₂O₃ | 0,5 - 4 |
| Li₂O | 0 - 1 |
| Na₂O | 2 - 5 |
| K₂O | 1 - 3 |
| MgO | 0 - 1 |
| CaO | 0 - 1 |
| BaO | 0 - 1 |
| Fe₂O₃ | 0,01 - 0,05 |
| TiO₂ | 0,05 - 0,8 |
| ZrO₂ | 0 - 1 |
| SnO₂ | 0 - 0,5 |
| MnO₂ | 0 - 0,5 |
| Sb₂O₃ | 0 - 0,5 |

2. Borosilicatglas nach Anspruch 1,
**gekennzeichnet durch**
eine Zusammensetzung (in Gew.-% auf Oxidbasis) von
| | |
|---|---|
| SiO₂ | 70 - 80 |
| B₂O₃ | 13 - 18 |
| Al₂O₃ | 0,5 - < 2 |
| Na₂O | 2 - 5 |
| K₂O | >1 - 3 |
| MgO | 0 - 1 |
| CaO | 0 - 1 |
| Fe₂O₃ | 0,01 - 0,05 |
| TiO₂ | 0,05 - 0,8 |
| ZrO₂ | 0 - 1 |
| SnO₂ | 0 - 0,5 |
| MnO₂ | 0 - 0,5 |
| Sb₂O₃ | 0 - 0,5 |

3. Borosilicatglas nach Anspruch 1 oder 2
**dadurch gekennzeichnet,**
**daß** es wenigstens 0,1 Gew.-%, bevorzugt wenigstens 0,2 Gew.-% TiO₂ enthält.

4. Borosilicatglas nach wenigstens einem der Ansprüche 1 bis 3 mit einem Transmissionsabfall bei λ = 300 nm von weniger als 5 % nach 15-stündiger HOK-4-Bestrahlung einer 0,2 mm dicken Glasprobe.

5. Borosilicatglas nach wenigstens einem der Ansprüche 1 bis 4 mit einer Transformationstemperatur Tg < 520 °C, mit einem thermischen Ausdehnungskoeffizienten α_{20/300} zwischen 3,7 x 10⁻⁶/K und 4,2 x 10⁻⁶/K, einer Transmission τ bei λ ≤ 260 nm von ≤ 30 % (bei 0,2 mm Probendicke).

6. Borosilicatglas nach wenigstens einem der Ansprüche 1 bis 5 mit einer Transformationstemperatur Tg < 520 °C, mit einem thermischen Ausdehnungskoeffizienten α_{20/300} zwischen 3,7 x 10⁻⁶/K und 4,2 x 10⁻⁶/K, einer Transmission bei λ ≤ 260 nm von ≤ 0,7 % (bei 0,2 mm Probendicke).

7. Verwendung eines Glases nach wenigstens einem der Ansprüche 1 bis 4 und 6 für die Herstellung von Leuchtstoffröhren für die Hintergrundbeleuchtungen von Displays.

8. Verwendung eines Glases nach wenigstens einem der Ansprüche 1 bis 4 und 6 für die Herstellung von Leuchtstoffröhren für Bremslichter von Fahrzeugen.

9. Verwendung eines Glases nach wenigstens einem der Ansprüche 1 bis 5 für die Herstellung von Blitzlampen.

10. Verwendung eines Glases nach wenigstens einem der Ansprüche 1 bis 5 für die Herstellung von Gasentladungslampen.

## Claims

1. Borosilicate glass, having a composition (in % by weight based on oxide) of
| | |
|---|---|
| SiO₂ | 70 - 80 |
| B₂O₃ | 13 - 18 |
| Al₂O₃ | 0.5 - 4 |
| Li₂O | 0 - 1 |
| Na₂O | 2 - 5 |
| K₂O | 1 - 3 |
| MgO | 0 - 1 |
| CaO | 0 - 1 |
| BaO | 0 - 1 |
| Fe₂O₃ | 0.01 - 0.05 |
| TiO₂ | 0.05 - 0.8 |
| ZrO₂ | 0 - 1 |
| SnO₂ | 0 - 0.5 |
| MnO₂ | 0 - 0.5 |
| Sb₂O₃ | 0 - 0.5 |

2. Borosilicate glass according to Claim 1, **characterized by** a composition (in % by weight based on oxide) of
| | |
|---|---|
| SiO₂ | 70 - 80 |
| B₂O₃ | 13 - 18 |
| Al₂O₃ | 0.5 - <2 |
| Na₂O | 2 - 5 |
| K₂O | >1 - 3 |
| MgO | 0 - 1 |
| CaO | 0 - 1 |
| Fe₂O₃ | 0.01 - 0.05 |
| TiO₂ | 0.05 - 0.8 |
| ZrO₂ | 0 - 1 |
| SnO₂ | 0 - 0.5 |
| MnO₂ | 0 - 0.5 |
| Sb₂O₃ | 0 - 0.5 |

3. Borosilicate glass according to Claim 1 or 2, **characterized in that** it contains at least 0.1% by weight, preferably at least 0.2% by weight, of TiO₂.

4. Borosilicate glass according to at least one of Claims 1 to 3, having a transmission loss at λ = 300 nm of less than 5% after HOK-4 irradiation for 15 hours of a 0.2 mm thick glass specimen.

5. Borosilicate glass according to at least one of Claims 1 to 4, having a transformation temperature Tg < 520°C, having a coefficient of thermal expansion α_{20/300} of between 3.7 x 10⁻⁶/K and 4.2 x 10⁻⁶/K, a transmission τ at λ ≤ 260 nm of ≤ 30% (for a 0.2 mm specimen thickness).

6. Borosilicate glass according to at least one of Claims 1 to 5, having a transformation temperature Tg < 520°C, having a coefficient of thermal expansion α_{20/300} of between 3.7 x 10⁻⁶/K and 4.2 x 10⁻⁶/K, a transmission τ at λ ≤ 260 nm of ≤ 0.7% (for a 0.2 mm specimen thickness).

7. Use of a glass according to at least one of Claims 1 to 4 and 6 for the production of fluorescent tubes for the background lighting of displays.

8. Use of a glass according to at least one of Claims 1 to 4 and 6 for the production of fluorescent tubes for brake lights of vehicles.

9. Use of a glass according to at least one of Claims 1 to 5 for the production of flashbulbs.

10. Use of a glass according to at least one of Claims 1 to 5 for the production of gas discharge lamps.

## Revendications

1. Verre borosilicate avec une composition (composition centésimale basée sur l'oxyde) de :
| | |
|---|---|
| **SiO₂** | **70 - 80** |
| **B₂O₃** | **13 - 18** |
| **Al₂O₃** | **0,5 - 4** |
| **Li₂O** | **0 - 1** |
| **Na₂O** | **2 - 5** |
| **K₂O** | **1 - 3** |
| **MgO** | **D - 1** |
| **CeO 0-** | **1** |
| **BaO** | **0 - 1** |
| **Fe₂O₃** | **0,01 - 0,05** |
| **TiO₂** | **0,05 - 0,8** |
| **ZrO₂** | **0 - 1** |
| **SnO₂** | **0 - 0,5** |
| **MnO₂** | **0 - 0,5** |
| **Sb₂O₃** | **0 - 0,5** |

2. Verre borosilicate selon la revendication 1, **caractérisé par** une composition (composition centésimale basée sur l'oxyde) de :
| | |
|---|---|
| **SiO₂** | **70 - 80** |
| **B₂O₃** | **13 - 18** |
| **Al₂O₃** | **0,5 - < 2 Na₂O 2 - 5** |
| **K₂O** | **> 1 - 3** |
| **MgO** | **0 - 1** |
| **CaO** | **0 - 1** |
| **Fe₂O₃** | **0.101 - 0,05** |
| **TiO₂** | **0.05 - 0,78** |
| **ZrO₂** | **0 - 1** |
| **SnO₂** | **0 - 0,5** |
| **MnO₂** | **0 - 0,5** |
| **Sb₂O₃** | **0 - 0,5** |

3. Verre borosilicate selon la revendication 1 ou 2, **caractérisé en ce qu'**il contient au moins 0,1 de composition centésimale de TiO₂, de préférence au moins 0,2 de composition centésimale.

4. Verre borosilicate selon au moins une des revendications 1 à 3 avec une perte de transmission inférieure à 5% après irradiation par HOK-4 d'un échantillon de verre de 0,2 mm d'épaisseur à λ = 300 nm pendant 15 heures.

5. Verre borosilicate selon au moins une des revendications 1 à 4 avec une température de transformation Tg < 520°C, avec un coefficient de dilation thermique α_{20/300} compris entre 3,7 x 10⁻⁶/K et 4,2 x 10⁻⁶/K, une transmission τ ≤ 30% pour λ ≤ 260 nm (pour une épaisseur de l'échantillon de 0,2 mm).

6. Verre borosilicate selon au moins une des revendications 1 à 5 avec une température de transformation Tg < 520°C, avec un coefficient de dilation thermique α_{20/300} compris entre 3,7 x 10⁻⁶/K et 4,2 x 10⁻⁶/K, une transmission τ ≤ 0,7% pour λ ≤ 260 nm (pour une épaisseur de l'échantillon de 0,2 mm).

7. Utilisation d'un verre selon au moins une des revendications 1 à 4 et 6 pour la fabrication de tubes à substances luminescentes pour les éclairages arrières d'écrans de visualisation.

8. Utilisation d'un verre selon au moins une des revendications 1 à 4 et 6 pour la fabrication de tubes à substances luminescentes pour des feux de freinage de véhicules.

9. Utilisation d'un verre selon au moins une des revendications 1 à 5 pour la fabrication de lampes éclairs.

10. Utilisation d'un verre selon au moins une des revendications 1 à 5 pour la fabrication de lampes à décharges à gaz.
